# EUROPEAN PATENT APPLICATION

(11) **EP 4 604 255 A1**
(43) Date of publication of application: **20.08.2025**
(21) Application number: 22969725.5
(22) Date of filing: 29.12.2022
(51) Int. Cl.: H01M 10/0587, H01M 10/04

(54) **WINDING DEVICE AND WINDING METHOD**

(71) Applicant: CONTEMPORARY AMPEREX TECHNOLOGY (HONG KONG) LIMITED, Hong Kong (HK)
(72) Inventor: YU, Wenqi, Ningde City, Fujian 352100 (CN); YE, Jie, Ningde City, Fujian 352100 (CN); LIN, Wenfa, Ningde City, Fujian 352100 (CN)
(74) Representative: Gong, Jinping
(86) International application number: PCT/CN2022/143649
(87) International publication number: WO 2024/138578

(57) **Abstract**

The embodiments of the application provide a winding device and a winding method. The winding device includes a winding member, a traction member, a detection mechanism and an adjustment mechanism. The winding member is used to wind an electrode sheet and a separation membrane. The traction member is used to pull the separation membrane passing through the winding member, and the traction member is configured to release the separation membrane when the winding member winds the electrode sheet and the separation membrane. The detection mechanism is used to sense a tension change of the separation membrane located between the winding member and the traction member. The adjustment mechanism is configured to adjust a tension of the separation membrane according to the tension change of the separation membrane sensed by the detection mechanism.

## Description

### TECHNICAL FIELD

The application relates to the field of battery technology, and in particular to a winding device and a winding method.

### BACKGROUND

Battery cells are widely used in electronic equipments such as mobile phones, laptop computers, electric bicycles, electric automobiles, electric aircrafts, electric ships, electric toy cars, electric toy ships, electric toy planes, and electric tools etc.

In the production process of battery cells, it is necessary to use winding device to wind the electrode sheet and separation membrane to form the electrode assembly of the battery cell. The electrode assembly is the core component for realizing the charging and discharging functions of battery cells, and its safety issue cannot be ignored. How to enhance safety of the battery cells is a technical problem demanding prompt solution in the battery technology.

### SUMMARY

The application provides a winding device and a winding method that can improve safety of the wound electrode assemblies.

In a first aspect, the application provides a winding device including a winding member, a traction member, a detection mechanism and an adjustment mechanism. The winding member is used to wind an electrode sheet and a separation membrane. The traction member is used to pull the separation membrane passing through the winding member, and the traction member is configured to release the separation membrane when the winding member winds the electrode sheet and the separation membrane. The detection mechanism is used to sense a tension change of the separation membrane located between the winding member and the traction member. The adjustment mechanism is configured to adjust a tension of the separation membrane according to the tension change of the separation membrane sensed by the detection mechanism.

In the aforesaid technical solution, the traction member can pull the separation membrane to pass through the winding member, in order to prestore a certain size of separation membrane before the winding member winds the separation membrane and the electrode sheet; when the winding member rotates and begins to wind the electrode sheet and separation membrane, the separation membrane released by the traction member and the newly transported separation membrane are stacked and wound around the outer circumference of the winding member, and thereby there are a plurality of layers of separation membranes between the positive and negative electrode sheets in the inner turns, so that the possibility of lithium dendrites piercing the separation membrane is reduced when lithium precipitation occurs, the risk of short circuit between the positive and negative electrode sheets is reduced, and safety is improved. By providing the detection mechanism and the adjustment mechanism, the tension change of the separation membrane between the winding member and the traction member can be detected in real time, and the tension of the separation membrane can be adjusted according to the tension change to reduce the tension fluctuation of the separation membrane, reduce the risk of electrode sheet wrinkling and misalignment of the separation membrane, and improve safety of the electrode assembly.

In some embodiments, the traction member pulls the separation membrane passing through the winding member by rotating.

In the aforesaid technical solution, by pulling the separation membrane in a way of rotation, it is easy to control the size of the separation membrane, reduce the stroke of the traction member, and simplify the structure of the winding device.

In some embodiments, the adjustment mechanism adjusts the tension of the separation membrane by adjusting a rotation speed of the traction member. The adjustment mechanism adjusts the tension of the separation membrane by adjusting the rotation speed of the traction member, so as to dispense with an additional component for adjusting the tension and simplify the structure of the winding device.

In some embodiments, the winding device further includes a rotational member configured to be rotatable. The winding member and the traction member are installed on the rotational member.

The traction member can wind the separation membrane by rotating, and the traction member can also wind the separation membrane and the electrode sheet. In other words, the winding member and the traction member are interchangeable. The rotational member can exchange the positions of the winding member and the traction member by rotating, so as to achieve the function exchange between the winding member and the traction member and improve the applicability of the winding device.

In some embodiments, the adjustment mechanism adjusts the tension of the separation membrane by adjusting a rotation speed of the winding member. The adjustment mechanism adjusts the tension of the separation membrane by adjusting the rotation speed of the winding member, so as to dispense with an additional component for adjusting the tension and simplify the structure of the winding device.

In some embodiments, the detection mechanism includes a pressure roller, a drive member and a displacement sensor. The pressure roller is used to press against the separation membrane, and the pressure roller is configured to be translationally movable; the drive member is connected to the pressure roller and used to apply an acting force to the pressure roller. The displacement sensor is configured to sense the tension change of the separation membrane by detecting a displacement of the pressure roller.

In the aforesaid technical solution, the drive member applies a constant force to the separation membrane through the pressure roller, and the displacement sensor can sense the displacement of the pressure roller in real time; the adjustment mechanism can calculate the real-time tension of the separation membrane according to the displacement of the pressure roller, thereby adjusting the tension of the separation membrane, achieving closed-loop control of the tension, reducing tension fluctuation of the separation membrane, reducing the risk of the electrode sheet wrinkling and misalignment of the separation membrane, and improving safety of the electrode assembly.

In some embodiments, the drive member includes a cylinder. The cylinder uses air pressure as a drive force, and its output has a small fluctuation in constant force, high accuracy, and is easy to control.

In some embodiments, the displacement sensor includes a grating ruler. The signal measured and output by the grating ruler is a digital pulse, which has the characteristics of a large detection range, high detection accuracy, and fast response speed.

In some embodiments, the pressure roller is configured to be translationally movable in a first direction; the winding device further includes a first roller and a second roller arranged opposite to each other in a second direction, and the first direction intersects with the second direction. The first roller, the pressure roller and the second roller are sequentially arranged in a tape run path of the separation membrane.

In the aforesaid technical solution, the first roller and the second roller can guide tape running of the separation membrane and provide an effective support for the separation membrane, reducing the risk of the separation membrane detaching from the pressure roller when the tension changes.

In some embodiments, the first roller and the second roller are both located on a side of the separation membrane away from the pressure roller. The first direction is perpendicular to the second direction; in the second direction, a distance between a central axis of the pressure roller and a central axis of the first roller is H1, a distance between the central axis of the pressure roller and a central axis of the second roller is H2, and H1 is equal to H2.

In the aforesaid technical solution, during tape running of the separation membrane, the separation membrane between the first roller and the pressure roller, and the separation membrane between the second roller and the pressure roller, receive roughly the same component force, which helps to improve the accuracy of the pressure roller sensing the tension change.

In some embodiments, the winding member includes two winding half shafts arranged opposite to each other, and the separation membrane is configured to pass between the two winding half shafts.

In the aforesaid technical solution, after the electrode assembly is formed, the separation membrane between the two winding half shafts is located inside the electrode sheet, which can increase the layer amount of the separation membrane at the winding center of the electrode assembly, so as to reduce the risk of lithium dendrites piercing the separation membrane and improve safety of the electrode assembly.

In some embodiments, the winding device further includes a cutting blade mechanism and the cutting blade mechanism is arranged upstream or downstream of the detection mechanism and used to cut off the separation membrane. By providing the cutting blade mechanism, it is possible to cut off the separation membrane as required and adjust the turn amount that the separation membrane is wound on the winding member.

In a second aspect, the embodiments of the application further provide a winding method, including: providing a separation membrane, the separation membrane passing through a winding member and being pulled by a traction member; providing an electrode sheet; the winding member winding the electrode sheet and the separation membrane, while the traction member releasing the separation membrane; sensing a tension change of the separation membrane located between the winding member and the traction member; adjusting a tension of the separation membrane according to the tension change of the separation membrane.

The traction member can pull the separation membrane to pass through the winding member, in order to prestore a certain size of separation membrane before the winding member winds the separation membrane and the electrode sheet; when the winding member rotates and begins to wind the electrode sheet and separation membrane, the separation membrane released by the traction member and the newly transported separation membrane are stacked and wound around the outer circumference of the winding member, and thereby there are a plurality of layers of separation membranes between the positive and negative electrode sheets in the inner turns, so that the possibility of lithium dendrites piercing the separation membrane is reduced when lithium precipitation occurs, the risk of short circuit between the positive and negative electrode sheets is reduced, and safety is improved. By detecting the tension change of the separation membrane in real time and adjusting the tension of the separation membrane according to the tension change, the tension fluctuation of the separation membrane is thereby reduced, the risk of the electrode sheet wrinkling and misalignment of the separation membrane is reduced, and the safety of the electrode assembly is improved.

In some embodiments, the step of adjusting the tension of the separation membrane according to the tension change of the separation membrane includes: when the tension change of the separation membrane is within a preset range, maintaining a rotation speed of the winding member; when the tension change of the separation membrane exceeds the preset range, changing the rotation speed of the winding member to adjust the tension of the separation membrane.

By adjusting the rotation speed of the winding member to adjust the tension of the separation membrane, the timeliness of tension closed-loop control can be improved, and the risk of the separation membrane wrinkling can be reduced.

In some embodiments, the separation membrane is configured to pass through a pressure roller, and the pressure roller is configured to be movable; before winding the electrode sheet and the separation membrane, the pressure roller is in a preset position. The step of sensing the tension change of the separation membrane located between the winding member and the traction member includes: when a distance of the pressure roller deviating from the preset position is less than or equal to a preset value, the tension change of the separation membrane is within the preset range; when the distance of the pressure roller deviating from the preset position is greater than the preset value, the tension change of the separation membrane exceeds the preset range.

The aforesaid technical solution calculates the real-time tension of the separation membrane according to the position change of the pressure roller, thereby adjusting the tension of the separation membrane, achieving closed-loop control of the tension, reducing tension fluctuation of the separation membrane, reducing the risk of the electrode sheet wrinkling and misalignment of the separation membrane, and improving safety of the electrode assembly.

### BRIEF DESCRIPTION OF THE DRAWINGS

In order to illustrate the technical solutions in embodiments of the application more clearly, the drawings to be used in the embodiments of the application will be briefly described below. Obviously, the drawings described below are merely some embodiments of the application, and it is also possible for a person of ordinary skill in the art to obtain further drawings from these drawings without creative work.
Figs. 1 and 2 are schematic views of a winding device in different operation states of some embodiments of the application respectively;
Fig. 3 is a schematic view of an electrode assembly wound by a winding device of some embodiments of the application;
Fig. 4 is a schematic enlarged view at the box A of Fig. 1;
Fig. 5 is a schematic enlarged view at the box B of Fig. 2;
Fig. 6 is a schematic structural view of a winding device provided by some other embodiments of the application;
Fig. 7 is a schematic structural view of a winding device provided by some still other embodiments of the application;
Fig. 8 is a schematic view of the winding device as shown in Fig. 7 during winding;
Fig. 9 is a schematic block diagram of a winding method provided by some embodiments of the application;
Fig. 10 is a schematic view of tension control logic of a winding device of some embodiments of the application.

The views are not necessarily plotted in actual proportion in the drawings.

### DETAILED DESCRIPTION

In order to make the purpose, the solution and the advantages of the embodiments of the application clearer, the technical solution of the embodiments of the application will be described clearly below with reference to the accompanying drawings. It is obvious that the embodiments as described are only a part of the embodiments of the application, rather than all of the embodiments. Based on the embodiments of the application, all other embodiments obtained by a person of ordinary skill in the art without creative efforts shall fall within the protection scope of the application.

Unless otherwise defined, all the technical and scientific terms used in the application have the same meanings as commonly understood by a person skilled in the art of the application. The terms used in the description of this application is for the purpose of describing specific embodiments only and is not intended to limit the application. The terms "comprise", "have" and any variations thereof in the description and claims of the application and the brief description of the drawings above are intended to cover non-exclusive inclusions. The terms "first", "second" and the like in the description and claims of the application or in the aforesaid drawings are used to distinguish different objects and are not used to describe a particular order or primary-secondary relationship.

Reference to "embodiment" in the application means that the specific features, structures, or characteristics described in connection with the embodiment may be included in at least one embodiment of the application. The presence of this phrase at various locations in the description does not necessarily refer to the same embodiment, nor is it a separate or alternative embodiment that is mutually exclusive from other embodiments.

In the description of the application, it is noted that, except as otherwise stipulated or limited explicitly, the terms "mount", "link", "connect", "attach" shall be interpreted expansively, for example, it may be fixed connection, removable connection or integral connection; may be direct connection or indirect connection via an intermediate medium, or may be communication inside two elements. For a person of ordinary skill in the art, the specific meaning of the above terms in the application can be interpreted depending on the specific situation.

In the application, the term "and/or" is merely to describe an association relationship of associated objects, meaning that there may be three relationship, for example, A and/or B may mean three cases that A exists alone, A and B exist simultaneously, and B exists alone. In addition, the character "/" in the application generally indicates that the related objects before and after have an "or" relationship.

In the embodiments of the application, the same reference numerals denote the same components, and in the different embodiments, detailed description of the same components is omitted for brevity. It should be understood that the thickness, length, width, and the like of the various components, and the overall thickness, length, width, and the like of the integrated device in the embodiments of the application shown in the drawings are merely illustrative and should not be construed as limiting of the application.

Reference to "a plurality of" in the application means two or more (including two).

Battery cells, such as lithium-ion battery cells, lithium sulfur battery cells, sodium lithium ion battery cells, sodium ion battery cells, or magnesium ion battery cells, have the advantages of high energy density, high power density, large amount of recycling, and long storage time, and have been widely used in electric devices suitable for battery cells. For example, the electric device may be a vehicle, a mobile phone, a portable device, a notebook computer, a ship, a spacecraft, an electric toy and a power tool, etc. The vehicle may be a fuel, gas or new energy vehicle. The new energy vehicle may be a pure electric vehicle, a hybrid vehicle, an extended-range vehicle, etc. The spacecraft includes an airplane, a rocket, an acrospaceplane, a spaceship, etc. The electric toy includes a fixed or movable electric toy, for example, a game machine, an electric car toy, an electric ship toy, and an electric airplane toy, etc. The power tool includes a metal cutting power tool, a grinding power tool, an assembly power tool, and a railway power tool, for example, an electric drill, an electric grinder, an electric wrench, an electric screwdriver, an electric hammer, an impact electric drill, a concrete vibrator and an electric planer, etc.

The battery cell includes an electrode assembly and electrolyte, and the electrode includes a positive electrode sheet, a negative electrode sheet, and a separator membrane. The battery cell operates mainly by moving metal ions between the positive and negative electrode sheets. The positive electrode sheet includes a positive electrode current collector and a positive electrode active material layer coated on a surface of the positive electrode current collector. The positive electrode current collector includes a positive electrode current collecting zone and a positive electrode tab protruding from the positive electrode current collecting zone. The positive electrode current collecting zone is coated with the positive electrode active material layer, and at least a part of the positive electrode tab is not coated with the positive electrode active material layer. Taking a lithium ion battery cell as an example, the material of the positive electrode current collector may be aluminum, the positive electrode active material layer includes a positive electrode active material, and the positive electrode active material may be lithium cobaltate, lithium iron phosphate, lithium ternary or lithium manganate, or the like. The negative electrode sheet includes a negative electrode current collector and a negative electrode active material layer coated on a surface of the negative electrode current collector. The negative electrode current collector includes a negative electrode current collecting zone and a negative electrode tab protruding from the negative electrode current collecting zone. The negative electrode current collecting zone is coated with the negative electrode active material layer, and at least a part of the negative electrode tab is not coated with the negative electrode active material layer. The material of the negative electrode current collector may be copper, the negative electrode active material layer includes a negative electrode active material, and the negative electrode active material may be carbon, silicon, or the like. The material of the separator membrane may be PP (polypropylene) or PE (polyethylene) or the like.

In related technologies, after the electrode assembly is formed by winding, there is an area difference between the positive and negative electrode sheets in the bending region of the innermost few turns of the electrode assembly within the same angle range, which is prone to lithium precipitation. Lithium crystallization can easily penetrate the separation membrane, causing the positive and negative electrode sheets to short connect, resulting in a short circuit inside the electrode assembly.

The inventor has attempted to install several layers of separation membranes between the positive and negative electrode sheets in the innermost turns of the electrode assembly. Even if lithium precipitation occurs, lithium crystallization is not easy to penetrate the separation membrane, thus overcoming the above defect and ensuring good safety performance of the electrode assembly even when lithium precipitation occurs in the innermost turns.

The inventor has designed a winding device that, by providing a traction member, pulls the separation membrane to pass through a winding member and form an outgoing section; when the winding member rotates, the winding member can not only pull in a new separation membrane from an incoming side of the separation membrane, but also wind the outgoing section in, thereby achieving industrial production of electrode assemblies without adding a new separation membrane feeding mechanism, improving winding efficiency and reducing costs.

The inventor has noticed that during winding, there are problems such as wrinkling of the electrode sheet and misalignment of the separation membrane, which can pose safety hazards. After in-depth research, the inventor has found that the reason for these problems is the fluctuation in tension of the separation membrane between the winding member and the traction member.

In view of this, the inventor provides a technical solution which provides a detection mechanism and an adjustment mechanism to detect the tension change of the separation membrane between the winding member and the traction member in real time and adjust the tension of the separation membrane according to the tension change, so as to reduce the tension fluctuation of the separation membrane, reduce the risk of electrode sheet wrinkling and misalignment of the separation membrane, and improve safety of the electrode assembly.

The winding device of the embodiments of the application will be further described below in combination with the drawings.

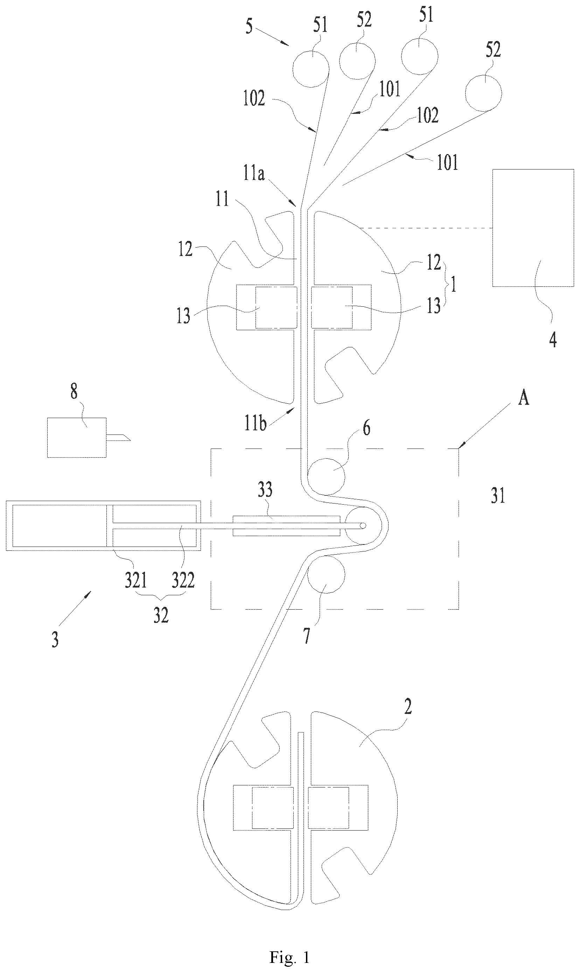

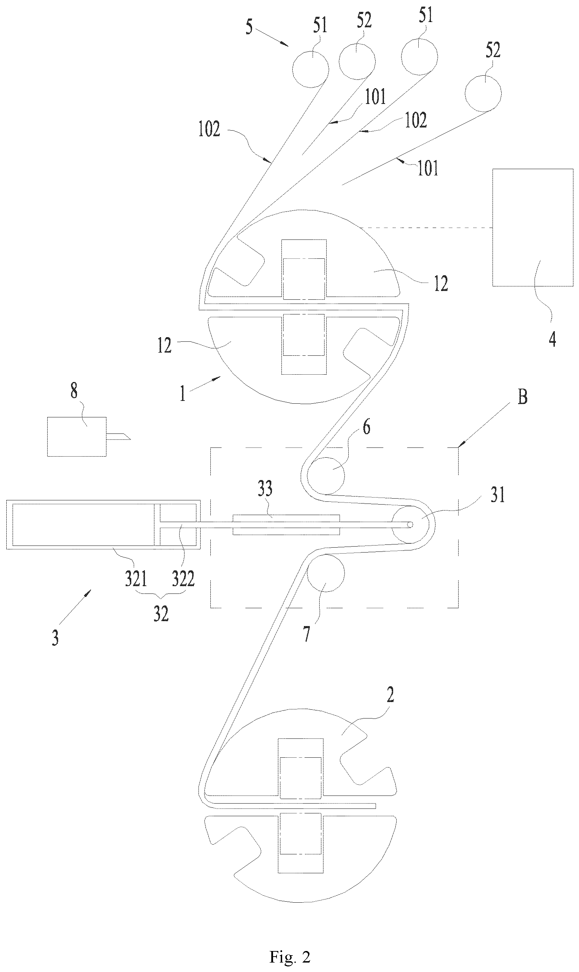

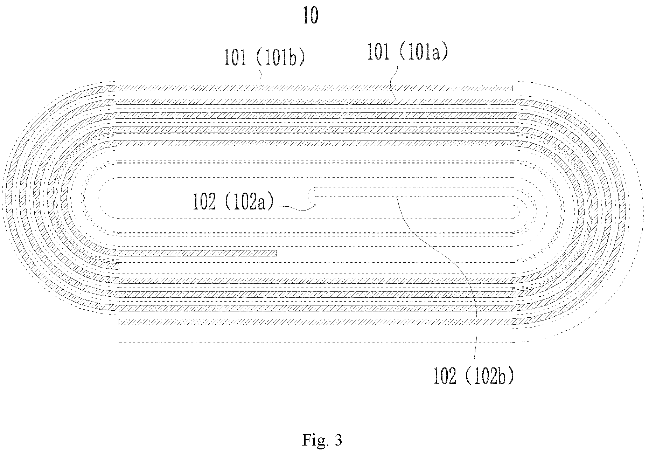

Figs. 1 and 2 are schematic views of a winding device in different operation states of some embodiments of the application respectively. Fig. 1 shows a state of the winding device before the winding member rotates, and Fig. 2 shows a state of the winding device when the winding member rotates. Fig. 3 is a schematic view of an electrode assembly wound by a winding device of some embodiments of the application.

As shown in Figs. 1 to 3, some embodiments of the application provide a winding device including a winding member 1, a traction member 2, a detection mechanism 3 and an adjustment mechanism 4. The winding member 1 is used to wind an electrode sheet 101 and a separation membrane 102. The traction member 2 is used to pull the separation membrane 102 passing through the winding member 1, and the traction member 2 is configured to release the separation membrane 102 when the winding member 1 winds the electrode sheet 101 and the separation membrane 102. The detection mechanism 3 is used to sense a tension change of the separation membrane 102 located between the winding member 1 and the traction member 2. The adjustment mechanism 4 is configured to adjust a tension of the separation membrane 102 according to the tension change of the separation membrane 102 sensed by the detection mechanism 3.

The winding device of the embodiments of the application can be used for winding and forming of the electrode assembly 10. The battery cell for which the electrode assembly 10 is applicable may be a lithium ion battery cell, a lithium sulfur battery cell, a sodium lithium ion battery cell, a sodium ion battery cell or a magnesium ion battery cell, which is not limited by the embodiments of the application.

For example, the electrode assembly 10 may be formed by winding two electrode sheets 101 and two separation membranes 102. The separation membrane 102 is an insulator located between two electrode sheets 101. For example, one of the electrode sheets 101 is an electrode sheet, and the other of the electrode sheets 101 is a negative electrode sheet.

The winding member 1 is used to wind the electrode sheet 101 and the separation membrane 102. For example, the winding member 1 may be a shaft-shaped structure that can conduct a spin motion around its own axis. When the winding member 1 rotates, the winding member 1 winds the separation membrane 102 and the electrode sheet 101 together to form a wound electrode assembly 10. The cross sectional shape of the winding member 1 itself may be generally elliptical, circular, or rhombic. Optionally, the material of the winding member 1 may be aluminum alloy or alloy steel.

The winding member 1 may be provided with a channel 11 having a first end 11a and a second end 11b. The separation membrane 102 provided by a feeding mechanism 5 enters the channel 11 through the first end 11a of the channel 11 and leaves the channel 11 through the second end 11b of the channel 11. The part where the separation membrane 102 penetrates from the channel 11 may be referred to as an outgoing section of the separation membrane 102. For example, the portion between the free end of the separation membrane 102 and the second end 11b is an outgoing section. The position corresponding to the second end 11b of the separation membrane 102 is a starting end of the outgoing section, and the free end of the separation membrane 102 is a tailing end of the outgoing section.

The traction member 2 may pull the separation membrane 102 to move by acting on the tailing end of the outgoing section, or by acting on the middle of the outgoing section.

The traction member 2 is arranged downstream of the winding member 1. In other words, the separation membrane 102 provided by the feeding mechanism 5 first passes through the winding member 1 and then is transported to the traction member 2.

The embodiments of the application do not limit the way in which the traction member 2 pulls the separation membrane 102 to move. For example, the traction member 2 may pull the separation membrane 102 to move by rotation, translation, or in other ways.

The detection mechanism 3 can sense a tension change of the separation membrane 102 located between the winding member 1 and the traction member 2. The embodiments of the application do not limit the type of the detection mechanism 3. For example, the detection mechanism 3 may include a tension sensor, a tension pendulum roller, or other devices.

The embodiments of the application do not limit the way in which the adjustment mechanism 4 adjusts the tension of the separation membrane 102. For example, the adjustment mechanism 4 may adjust the tension of the separation membrane 102 by adjusting the rotation speed of the winding member 1, the speed of the traction member 2 releasing the separation membrane 102, or in other ways.

In the embodiments of the application, the traction member 2 can pull the separation membrane 102 to pass through the winding member 1, in order to prestore a certain size of separation membrane 102 before the winding member 1 winds the separation membrane 102 and the electrode sheet 101; when the winding member 1 rotates and begins to wind the electrode sheet 101 and separation membrane 102, the separation membrane 102 released by the traction member 2 and the newly transported separation membrane 102 are stacked and wound around the outer circumference of the winding member 1, and thereby there are a plurality of layers of separation membranes 102 between the positive and negative electrode sheets in the inner turns, so that the possibility of lithium dendrites piercing the separation membrane 102 is reduced when lithium precipitation occurs, the risk of short circuit between the positive and negative electrode sheets is reduced, and safety is improved. By providing the detection mechanism 3 and the adjustment mechanism 4, the tension change of the separation membrane 102 between the winding member 1 and the traction member 2 can be detected in real time, and the tension of the separation membrane 102 can be adjusted according to the tension change, so as to reduce the tension fluctuation of the separation membrane 102, reduce the risk of wrinkling of the electrode sheet 101 and misalignment of the separation membrane 102, and improve safety of the electrode assembly 10.

Fig. 3 shows an electrode assembly 10 wound by a winding device of some embodiments of the application. The electrode assembly 10 includes two electrode sheets 101 and two separation membranes 102, and the two electrode sheets 101 are a positive electrode sheet 101a and a negative electrode sheet 101b respectively. The two separation membranes 102 may be referred to as a first separation membrane 102a and a second separation membrane 102b respectively.

The first separation membrane 102a is folded into two layers at the winding-start end, and the second separation membrane 102b is folded into two layers at the winding-start end. The four-layer separation membrane structure formed by the first separation membrane 102a and the second separation membrane 102b is wound for a plurality of turns, so that there are a plurality of layers of separation membranes between the innermost turn of positive electrode sheet 101a and the innermost turn of negative electrode sheet 101b, and as a result, when lithium precipitation occurs, the possibility of lithium dendrites piercing the separation membrane is reduced, the risk of contact short circuit of the positive and negative electrodes is reduced, and safety is improved.

For example, during winding, the first separation membrane 102a is folded at a position corresponding to the second end 11b of the channel 11, and the second separation membrane 102b is folded at a position corresponding to the second end 11b of the channel 11.

In some embodiments, the winding device further includes a feeding mechanism 5 for providing the electrode sheet 101 and the separation membrane 102.

In some embodiments, the feeding mechanism 5 includes a separation membrane feeding device 51 and an electrode sheet feeding device 52. The separation membrane feeding device 51 and the electrode sheet feeding device 52 are arranged upstream of the winding member 1, the separation membrane feeding device 51 is used to provide the separation membrane 102, and the electrode sheet feeding device 52 is used to provide the electrode sheet 101.

The separation membrane feeding device 51 can provide the separation membrane 102 to the winding member 1 during rotation of the winding member 1. For example, the separation membrane feeding device 51 may include a separation membrane unwinding roller.

The amount of the separation membrane feeding device 51 may be two, and the two separation membrane feeding devices 51 provide two separation membranes 102 for the winding member 1.

The electrode sheet feeding device 52 can provide the electrode sheet 101 to the winding member 1 during rotation of the winding member 1. For example, the electrode sheet feeding device 52 includes an electrode sheet unwinding roller.

The amount of the electrode sheet feeding device 52 may be two, and the two separation membrane feeding devices 52 provide two electrode sheets 101 for the winding member 1.

In some embodiments, the winding device further includes a plurality of over rollers (not shown) for guiding the electrode sheet 101 and the separation membrane 102 into the winding member 1.

In some embodiments, the winding member 1 includes two winding half shafts 12 arranged opposite to each other, and the separation membrane 102 is configured to pass between the two winding half shafts 12.

For example, the winding half shafts 12 may take the form of a semi cylindrical, semi elliptical cylindrical, or other shapes.

A channel 11 is formed between the two winding half shafts 12. Before the winding member 1 winds the electrode sheet 101 and the separation membrane 102, a part of the separation membrane 102 passes between the two winding half shafts 12 and is connected to the traction member 2.

The positions of the two winding half shafts 12 may be relatively fixed; of course, the two winding half shafts 12 may also be close to or far from each other.

For example, the winding half shaft 12 may be a semicircular shaft.

After the electrode assembly 10 is formed, the separation membrane 102 between the two winding half shafts 102 is located inside the electrode sheet 101, which can increase the layer amount of the separation membrane 102 at the winding center of the electrode assembly 10, so as to reduce the risk of lithium dendrites piercing the separation membrane 102 and improve safety of the electrode assembly 10.

In some embodiments, the winding member 1 further includes two clamping members 13 arranged opposite to each other and installed on the two winding half shafts 12 respectively, and the two clamping members 13 can move relative to each other to clamp the separation membrane 102.

The two clamping members 13 can approach or go away from each other. Optionally, one clamping member 13 is fixed to one of the winding half shafts 12, and the other clamping member 13 is movably connected to the other winding half shaft 12 to achieve approaching or separating of the two clamping members 13. Of course, alternatively, the two clamping members 13 both can be movably connected to the two winding half shafts 12.

Before the winding member 1 winds the electrode sheet 101 and the separation membrane 102, a part of the separation membrane 102 passes between the two winding clamping members 13 and is connected to the traction member 2.

When the winding member 1 is required to rotate so as to wind the separation membrane 102 and the electrode sheet 101, the two clamping members 13 can approach each other so as to clamp the separation membrane 102, reduce the looseness of the separation membrane 102 during winding, reduce the risk of the separation membrane 102 wrinkling, and improve safety of the electrode assembly 10.

Compared to the solution using two winding half shafts to clamp the separation membrane, this embodiment uses a clamping member 13 to clamp the separation membrane 102, which can fix the positions of the two winding half shafts 12 relative to each other, thereby simplifying the structure of the winding member 1.

In some embodiments, the traction member 2 pulls the separation membrane 102 passing through the winding member 1 by rotating.

The traction member 2 can wind the separation membrane 102 around its periphery by rotating. By adjusting the turn amount of the separation membrane 102 wound on the traction member 2, a length of the outgoing section of the separation membrane 102 can be adjusted. The traction member 2 can switch the winding and unwinding of the separation membrane 102 by changing the direction of rotation.

For example, after connecting the separation membrane 102 to the traction member 2, the traction member 2 may rotate clockwise to wind a certain amount of turns of the separation membrane 102 on the traction member 2; when the length of the outgoing section of the separation membrane 102 reaches a preset value, the winding member 1 starts to rotate and wind the separation membrane 102 and the electrode sheet 101; at the same time, the traction member 2 rotates counterclockwise and releases the separation membrane 102.

By pulling the separation membrane 102 in a way of rotation, it is easy to control the size of the separation membrane 102, reduce the stroke of the traction member 2, and simplify the structure of the winding device.

In some embodiments, the adjustment mechanism 4 adjusts the tension of the separation membrane 102 by adjusting the rotation speed of the traction member 2.

For example, a linear speed of the separation membrane 102 at the winding member 1 is V1, and a linear speed of the separation membrane 102 at the traction member 2 is V2. The larger the difference between V1 and V2 is, the greater the tension of the separation membrane 102 during tape running.

In the embodiments of the application, the adjustment mechanism 4 adjusts the tension of the separation membrane 102 by adjusting the rotation speed of the traction member 2, so as to dispense with an additional component for adjusting the tension and simplify the structure of the winding device.

For example, the adjustment mechanism 4 includes a PLC (programmable logic controller) in signal connection to a traction drive motor and the traction drive motor is connected to the traction member 2. The PLC adjusts the rotation speed of the traction member 2 by the drive motor.

In some other embodiments, the adjustment mechanism 4 adjusts the tension of the separation membrane 102 by adjusting the rotation speed of the winding member 1. Optionally, the PLC is in signal connection to the winding drive motor, and the winding drive motor is connected to the winding member 1; the PLC adjusts the rotation speed of the winding member 1 by the winding drive motor.

The adjustment mechanism 4 adjusts the tension of the separation membrane 102 by adjusting the rotation speed of the winding member 1, so as to dispense with an additional component for adjusting the tension and simplify the structure of the winding device.

In some still other embodiments, the adjustment mechanism 4 adjusts the tension of the separation membrane 102 by adjusting the rotation speed of the winding member 1 and the rotation speed of the traction member 2.

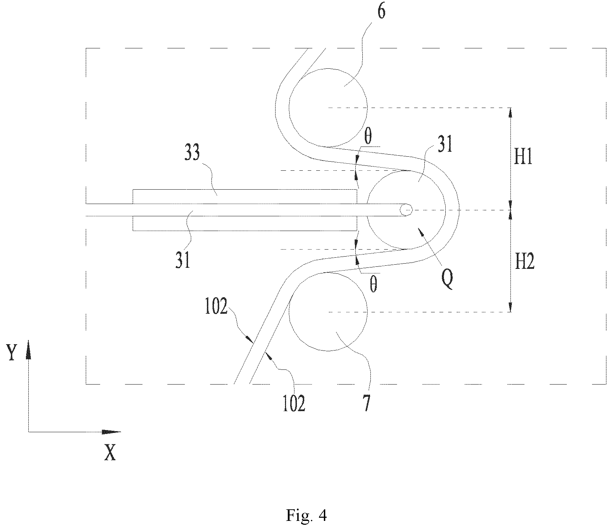

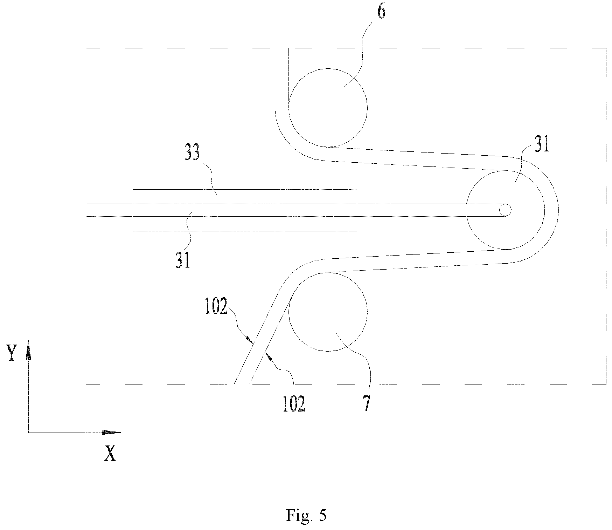

Fig. 4 is a schematic enlarged view at the box A of Fig. 1, and Fig. 5 is a schematic enlarged view at the box B of Fig. 2.

Referring to Figs. 1 to 5 together, in some embodiments, the detection mechanism 3 includes a pressure roller 31, a drive member 32 and a displacement sensor 33. The pressure roller 31 is used to press against the separation membrane 102, and the pressure roller 31 is configured to be translationally movable. The drive member 32 is connected to the pressure roller 31 and used to apply an acting force to the pressure roller 31; the displacement sensor 33 is configured to sense the tension change of the separation membrane 102 by detecting a displacement of the pressure roller 31.

The drive member 32 applies a constant force to the separation membrane 102 through the pressure roller 31, and the displacement sensor 33 can sense the displacement of the pressure roller 31 in real time; the adjustment mechanism 4 can calculate the real-time tension of the separation membrane 102 according to the displacement of the pressure roller 31, thereby adjusting the tension of the separation membrane 102, achieving closed-loop control of the tension, reducing tension fluctuation of the separation membrane 102, reducing the risk of the electrode sheet 101 wrinkling and misalignment of the separation membrane 102, and improving safety of the electrode assembly 10.

For example, the drive member 32 applies a constant force F to the pressure roller 31, and the displacement sensor 33 monitors the position of the pressure roller 31 in real time. Before starting the tension closed-loop control, the tension of the separation membrane 102 is calibrated. For example, when the tension of the separation membrane 102 is a set tension Fs, the pressure roller 31 is in a preset position Q.

The displacement sensor 33 monitors a distance ΔS of the pressure roller 31 deviating from the preset position Q in real time. The pressure roller 31 is configured to be translationally movable in a first direction X. For example, the pressure roller 31 may be offset to the left of the preset position Q or may also be offset to the right of the preset position Q.

When the pressure roller 31 is offset to the left of the preset position Q, if the value of ΔS is less than a set value D1, the tension of the separation membrane 102 fluctuates within an allowable range. When the value of ΔS is greater than or equal to the set value D1, the adjustment mechanism 4 feedback controls the rotation speed of the winding member 1 and/or the traction member 2 to make ΔS≤D1, that is, the tension of the separation membrane 102 returns to the allowable fluctuation range, reducing the risk of wrinkling of the electrode sheet 101 and misalignment of the separation membrane 102, and improving safety of the electrode assembly 10.

When the pressure roller 31 is offset to the right of the preset position Q, if the value of ΔS is less than a set value D2, the tension of the separation membrane 102 fluctuates within an allowable range. When the value of ΔS is greater than or equal to the set value D2, the adjustment mechanism 4 feedback controls the rotation speed of the winding member 1 and/or the traction member 2 to make ΔS≤D2, that is, the tension of the separation membrane 102 returns to the allowable fluctuation range, reducing the risk of wrinkling of the electrode sheet 101 and misalignment of the separation membrane 102, and improving safety of the electrode assembly 10.

The set values D1 and D2 may be determined based on the allowable tension fluctuation range of the separation membrane 102. For example, the allowable tension fluctuation range of the separation membrane 102 is from (Fs-20)gf to (Fs+20)gf. Optionally, in order to improve accuracy, the allowable tension fluctuation range of the separation membrane 102 may be from (Fs-10)gf to (Fs+10)gf.

Optionally, D1 is equal to D2.

The embodiments of the application convert the position of the pressure roller 31 to a real-time value of the tension of the separation membrane 102. This method can simplify the structure of the detection mechanism 3 and reduce the space occupied by the device.

In some embodiments, the drive member 32 includes a cylinder. The cylinder uses air pressure as a drive force, and its output has a small fluctuation in constant force, high accuracy, and is easy to control.

For example, the cylinder includes a cylinder body 321 and a piston 322 movably arranged at the cylinder body 321. The piston 322 is connected to the pressure roller 31.

For example, the output air pressure can be set through a control panel of the cylinder.

In some embodiments, the winding device also includes an air pressure detection mechanism (not shown). The air pressure detection mechanism monitors the output pressure of the cylinder in real time and provides timely feedback when there is a significant fluctuation in the output pressure of the cylinder.

For example, the set output air pressure of the cylinder is P; at the set output air pressure P, a constant force output by the cylinder to the pressure roller 31 is F. The output pressure of the cylinder allows for a fluctuation in a small range. For example, when the output pressure of the cylinder is within P±0.005MPa, it can satisfy the requirements.

The pressure data detected by the pressure detection mechanism can be uploaded to the PLC so as to monitor the change of the output pressure in real time; when the pressure detection mechanism detects that the output pressure of the cylinder deviates significantly from the set output pressure of P (for example, greater than 0.005MPa), the winding device alarms and stops for processing.

The embodiments of the application, by providing the pressure detection mechanism, can reduce the fluctuation of the constant force F caused by the fluctuation of the output air pressure and improve the accuracy of tension detection calculation for the separation membrane 102.

In some embodiments, the displacement sensor 33 includes a grating ruler. The signal measured and output by the grating ruler is a digital pulse, which has the characteristics of a large detection range, high detection accuracy, and fast response speed.

The stroke of the pressure roller 31 mustn't exceed the detection range of the grating ruler. For example, the grating ruler is horizontally arranged, and the pressure roller 31 moves in the horizontal direction.

In some embodiments, the pressure roller 31 is configured to be translationally movable in the first direction X. The winding device further includes a first roller 6 and a second roller 7 arranged opposite to each other in a second direction Y, and the first direction X intersects with the second direction Y. The first roller 6, the pressure roller 31 and the second roller 7 are sequentially arranged in a tape run path of the separation membrane 102. Optionally, the first direction X is parallel to the horizontal direction.

The first roller 6 and the second roller 7 can guide tape running of the separation membrane 102 and provide an effective support for the separation membrane 102, reducing the risk of the separation membrane 102 detaching from the pressure roller 31 when the tension changes.

In some embodiments, the first roller 6 and the second roller 7 are both located on a side of the separation membrane 102 away from the pressure roller 31. The first direction X is perpendicular to the second direction Y. In the second direction Y, a distance between a central axis of the pressure roller 31 and a central axis of the first roller 6 is H1, a distance between the central axis of the pressure roller 31 and a central axis of the second roller 7 is H2, and H1 is equal to H2.

During tape running of the separation membrane 102, the separation membrane 102 between the first roller 6 and the pressure roller 7, and the separation membrane 102 between the second roller 7 and the pressure roller 31, receive roughly the same component force, which helps to improve the accuracy of the pressure roller 31 sensing the tension change and reduce the difficulty of determining the preset position Q.

In some embodiments, when the pressure roller 31 is in the preset position Q, an angle between the separation membrane 102 between the first roller wheel 6 and the pressure roller 31 and the separation membrane 102 between the second roller wheel 7 and the pressure roller 31 is 120°. When the pressure roller is in the preset position Q and in a balanced state, the tension of the separation membrane 102 between the first roller wheel 6 and the pressure roller 31, the tension of the separation membrane 102 between the second roller wheel 7 and the pressure roller 31, and the constant force F are generally the same.

For example, as shown in Figs. 4 and 5, the cylinder is driven by an air pressure. When the output air pressure of the cylinder is constant, the cylinder applies a constant force F to the pressure roller 31, and correspondingly, the acting force exerted by the pressure roller 31 on the separation membrane 102 is also constant. In the case of the constant force F without any change throughout the entire process, the rotation speed difference between the winding member 1 and traction member 2 generates the tension of the separation membrane 102.

When the tension of the separation membrane 102 fluctuates due to the thickness fluctuation of the electrode assembly 10, the separation membrane 102 will push the pressure roller 31 to move. When the tension of the separation membrane 102 is greater than the set tension Fs, the pressure roller 31 is pressed to move to the left; on the contrary, when the tension of the separation membrane 102 is less than the set tension Fs, the pressure roller 31 is pressed to move to the right. The distance that the pressure roller 31 moves to the left or right is converted into the tension of the separation membrane 102, and a closed-loop jump is carried out based on this tension to reduce the risk of uncontrolled tension of the separation membrane 102 itself.

The included angle between the separation membrane 102 between the first roller 6 and the pressure roller 31 and the first direction X, and the included angle between the separation membrane 102 between the second roller 7 and the pressure roller 31 and the first direction X, are both *θ*_{∘} The component forces of the constant force F on the separation membranes 102 on both sides of the pressure roller 31 are F1 and F2 respectively, and F1=F2=F/(2*cosθ)_{∘} In the balanced state, the tension of the separation membrane 102 is equal to F1. Based on the set tension Fs and the constant force F, the value of *θ* can be determined, that is, the preset position Q of the pressure roller 31 can be determined. Optionally, when the pressure roller 31 is in the preset position Q, *θ* is 60°.

The allowable fluctuation range of the pressure roller 31 can be determined based on the allowable tension fluctuation range of the separation membrane 102. For example, the allowable range of the tension fluctuation for the separation membrane 102 is from (Fs-20)gf to (Fs+20)gf, and the range of the tension fluctuation is converted into the position range of the stroke fluctuation of the pressure roller 31, which can be referred to as a calibrated fluctuation range; within the calibrated fluctuation range, the tension fluctuation of the separation membrane 102 does not exceed ±20gf.

After the winding member 1 starts winding, the grating ruler monitors the position of the pressure roller 31 in real time. If the position of the pressure roller 31 exceeds the calibrated fluctuation range, the rotation speed of the winding member 1 is adjusted to match the rotation speed of the traction member 2, so that the pressure roller 31 quickly returns to the calibrated fluctuation range. If the pressure roller 31 does not deviate from the calibrated fluctuation range, then all the operating parameters are kept unchanged until the position of the pressure roller 31 exceeds the calibrated fluctuation range or winding is completed.

The embodiments of the application applies a constant force to the separation membrane 102 through the pressure roller 31, calculates the real-time tension according to the position change of the pressure roller 31, which provides a function of tension control, matches the linear speed of the winding member 1 and the linear speed of the traction member 2 to achieve the closed-loop control of the tension of the separation membrane 102 between the winding member 1 and the traction member 2.

The embodiments of application can reduce adjustment actions and increase the accuracy of the detection mechanism 3 by setting the calibrated fluctuation range.

In some embodiments, the winding device further includes a cutting blade mechanism 8 and the cutting blade mechanism 8 is arranged upstream or downstream of the detection mechanism 3 and used to cut off the separation membrane 102.

The cutting blade mechanism 8 is arranged upstream of the detection mechanism 3, which means that in the path of tape running of the separation membrane 102, the cutting blade mechanism 8 is located between the detection mechanism 3 and the winding member 1. The cutting blade mechanism 8 is arranged downstream of the detection mechanism 3, which means that in the path of tape running of the separation membrane 102, the cutting blade mechanism 8 is located between the detection mechanism 3 and the traction member 2.

In the embodiments of the application, it is possible to providing the cutting blade mechanism 8 only upstream of the detection mechanism 3, or it is also possible to providing the cutting blade mechanism 8 only downstream of the detection mechanism 3, and it is also possible to providing the cutting blade mechanisms 8 both upstream and downstream of the detection mechanism 3.

By providing the cutting blade mechanism 8, it is possible to cut off the separation membrane 102 as required and adjust the turn amount that the separation membrane 102 is wound on the winding member 1.

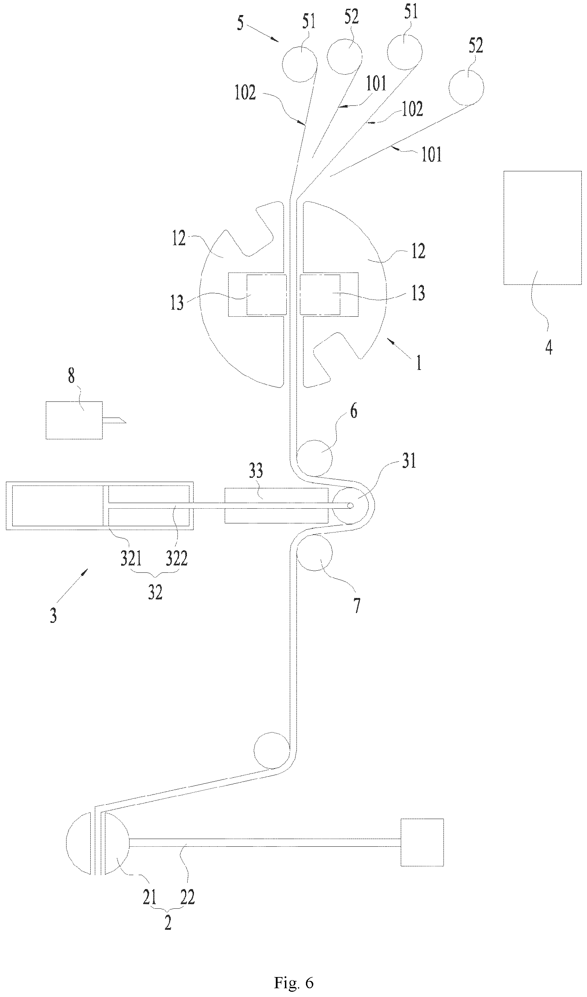

Fig. 6 is a schematic structural view of a winding device provided by some other embodiments of the application.

As shown in Fig. 6, in some embodiments, the traction member 2 may pull the separation membrane 102 passing through the winding member 1 by translating.

The traction member 2 can pull, by translating, the traction separation membrane 102 to move, so that the length of the outgoing section achieve the preset value. When the winding member 1 starts winding, the traction member 2 may also release the separation membrane 102 by translating. The difference between the linear speed of the separation membrane 102 at the winding member 1 and the movement speed of the traction member 2 can generate a tension in the separation membrane 102.

In some embodiments, the traction member 2 includes a tractor 21 and a driver 22, the driver 22 is connected to the tractor 21 and used to drive the tractor 21 to translate, and the tractor 21 can be used to connect the separation membrane 102.

For example, the tractor 21 can act on the separation membrane 102 by clamping or can also act on the separation membrane 102 by vacuum adsorption, so as to reduce the risk of the separation membrane 102 detaching from the tractor 21 during pulling the separation membrane 102.

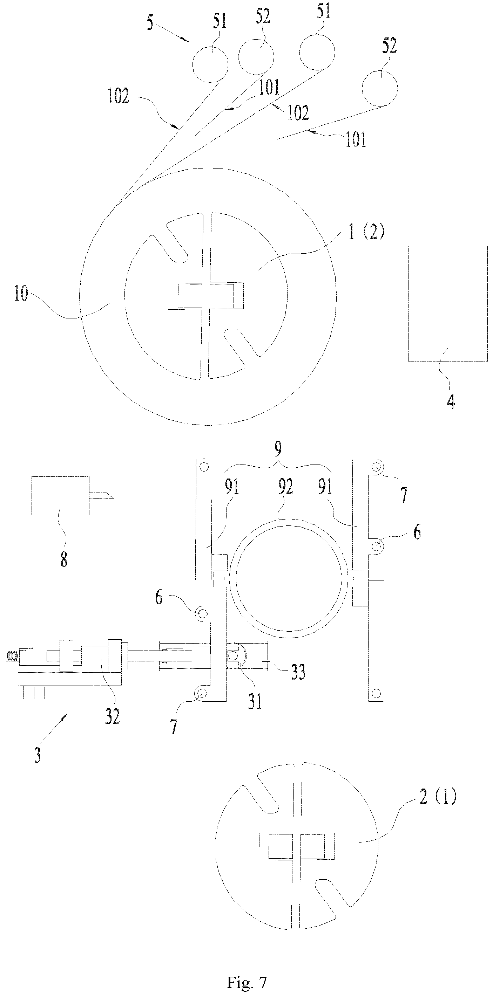

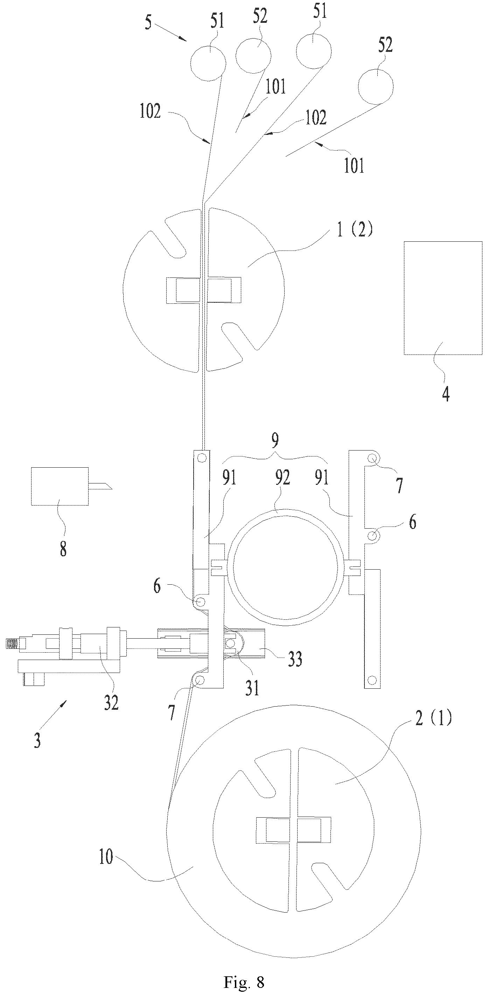

Fig. 7 is a schematic structural view of a winding device provided by some still other embodiments of the application; Fig. 8 is a schematic view of the winding device as shown in Fig. 7 during winding.

As shown in Figs. 7 and 8, in some embodiments, the winding device further includes a rotational member 9 configured to be rotatable. The winding member 1 and the traction member 2 are installed on the rotational member 9.

The traction member 2 can wind the separation membrane 102 by rotating, and the traction member 2 can also wind the separation membrane 102 and the electrode sheet 101. In other words, the winding member 1 and the traction member 2 are interchangeable. The rotational member 9 can exchange the positions of the winding member 1 and the traction member 2 by rotating, so as to achieve the function exchange between the winding member 1 and the traction member 2 and improve the applicability of the winding device.

In some embodiments, the winding member 1 and the traction member 2 adopt the same structure.

For example, as shown in Fig. 7, when the winding member 1 winds the electrode sheet 101 and the separation membrane 102 into an electrode assembly 10 with a preset structure, an additional section of the separation membrane 102 is wound around the periphery of the electrode assembly 10, which can be referred to as the prestored separation membrane.

As shown in Fig. 8, the rotational member 9 rotates the winding member 1 and the traction member 2 to exchange the positions of the winding member 1 and the traction member 2. At this time, the winding member 1 wound with the electrode assembly 10 acts as a new traction member, and the traction member 2 wound without the separation membrane 102 and the electrode sheet 101 acts as a new winding member.

The new winding member begins to wind the electrode sheet 101 and the separation membrane 102, while the new traction member rotates to release the prestored separation membrane 102 on the new traction member. The separation membrane 102 transported by the feeding mechanism 5 and the separation membrane 102 released by the new traction member are stacked and wound onto the new winding member.

When the prestored separation membrane 102 on the new traction member is completely released, the cutting blade mechanism 8 cuts off the separation membrane 102; after the cutting blade mechanism 8 cuts off the separation membrane 102, the new traction member can rewind the redundantly released separation membrane 102 by rotating, so that the electrode assembly 10 on the new traction member is formed into a preset structure. Then the electrode assembly 10 on the new traction member can be unloaded. After unloading the electrode assembly 10, the shape of the winding device is shown in Fig. 7.

Then the previous actions are repeated to achieve continuous winding of the winding device.

The winding device of the embodiments of the application can achieve continuous winding of the electrode sheet 101 and the separation membrane 102, reduce manual threading processes, achieve continuous production of the electrode assembly 10, and improve efficiency.

For example, both the winding member 1 and the traction member 2 can move along their own axial directions. As shown in Figs. 7 and 8, during exchanging the positions of the traction member 2 and the winding member 1, the traction member 2 can move in its own axial direction, so that the separation membrane 102 is inserted into the channel of the traction member 2.

Optionally, the axial direction of the winding member 1 is parallel to the axial direction of the traction member 2 and perpendicular to the first direction X and the second direction Y.

In some embodiments, when the rotational member 9 rotates the winding member 1 and the traction member 2, the pressure roller 31 of the detection mechanism 3 is in a retracted state and will not interfere with the movement of the winding member 1 and the traction member 2. In the state as shown in Fig. 8, the cylinder pushes the pressure roller 31 to move, so that the pressure roller 31 presses against the separation membrane 102.

In some embodiments, the rotational member 9 includes two brackets 91, each of which is equipped with a first roller 6 and a second roller 7.

For example, the rotational member 9 includes a rotating drum 92, and the two brackets 91 are respectively arranged on two sides of the rotating drum 92. When the rotational member 9 rotates to adjust the position of the winding member 1 and the traction member 2, the two brackets 91 will also exchange their positions synchronously, so that the first roller wheel 6 and the second roller wheel 7 on the bracket 91 can effectively support the separation membrane 102.

Referring to Figs. 7 and 8, the embodiments of the application provide a winding device including a winding member 1, a traction member 2, a detection mechanism 3, an adjustment mechanism 4 and a rotational member 9. The winding member 1 is used to wind the electrode sheet 101 and the separation membrane 102, and the winding member 1 includes two winding half shafts 12 arranged opposite to each other, and the separation membrane 102 is configured to pass between the two winding half shafts 12. The traction member 2 is used to pull the separation membrane 102 passing through the winding member 1, and the traction member 2 is configured to release the separation membrane 102 when the winding member 1 winds the electrode sheet 101 and the separation membrane 102.

The rotational member 9 is configured to be rotatable, and the winding member 1 and the traction member 2 are installed on the rotational member 9.

The detection mechanism 3 includes a pressure roller 31, a drive member 32 and a displacement sensor 33. The pressure roller 31 is used to press against the separation membrane 102, and the pressure roller 31 is configured to be translationally movable. The drive member 32 is connected to the pressure roller 31 and used to apply an acting force to the pressure roller 31; the displacement sensor 33 is configured to sense the tension change of the separation membrane 102 by detecting a displacement of the pressure roller 31. The adjustment mechanism 4 is configured to adjust a tension of the separation membrane 102 according to the tension change of the separation membrane 102 sensed by the detection mechanism 3.

The pressure roller 31 is configured to be translationally movable in a first direction X. The winding device further includes a first roller 6 and a second roller 7 arranged opposite to each other in a second direction Y, and the first direction X intersects with the second direction Y. The first roller 6, the pressure roller 31 and the second roller 7 are sequentially arranged in a tape run path of the separation membrane 102.

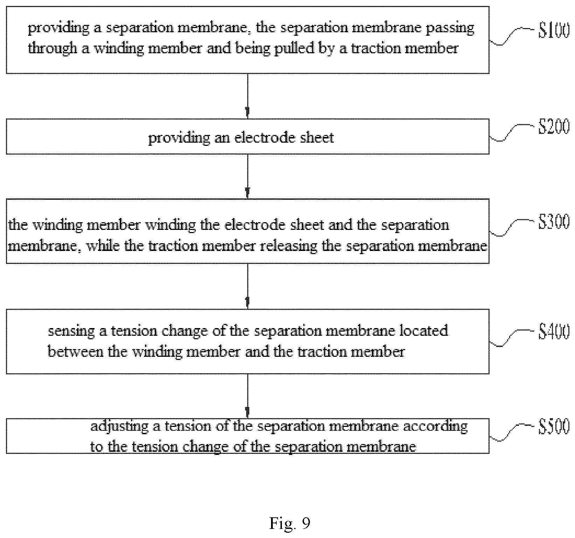

Fig. 9 is a schematic block diagram of a winding method provided by some embodiments of the application.

As shown in Fig. 9, the winding method of the embodiments of the application includes:
S100, providing a separation membrane, the separation membrane passing through a winding member and being pulled by a traction member;
S200, providing an electrode sheet;
S300, the winding member winding the electrode sheet and the separation membrane, while the traction member releasing the separation membrane;
S400, sensing a tension change of the separation membrane located between the winding member and the traction member;
S500, adjusting a tension of the separation membrane according to the tension change of the separation membrane.

When manufacturing a battery assembly based on the aforesaid winding method, it is not necessary to follow the above steps in sequence, that is, the steps may be executed in the order as mentioned in the embodiments, or the steps may also be executed in an order different from that as mentioned in the embodiments, or multiple steps may be executed simultaneously. For example, the steps S100 and S200 have no chronological order for execution, and may also be carried out simultaneously.

In the embodiments of the application, the traction member can pull the separation membrane to pass through the winding member, in order to prestore a certain size of separation membrane before the winding member winds the separation membrane and the electrode sheet; when the winding member rotates and begins to wind the electrode sheet and separation membrane, the separation membrane released by the traction member and the newly transported separation membrane are stacked and wound around the outer circumference of the winding member, and thereby there are a plurality of layers of separation membranes between the positive and negative electrode sheets in the inner turns, so that the possibility of lithium dendrites piercing the separation membrane is reduced when lithium precipitation occurs, the risk of short circuit between the positive and negative electrode sheets is reduced, and safety is improved. By detecting the tension change of the separation membrane in real time and adjusting the tension of the separation membrane according to the tension change, the tension fluctuation of the separation membrane is thereby reduced, the risk of the electrode sheet wrinkling and misalignment of the separation membrane is reduced, and the safety of the electrode assembly is improved.

In some embodiments, the step S500 includes: S510, when the tension change of the separation membrane is within a preset range, maintaining a rotation speed of the winding member; S520, when the tension change of the separation membrane exceeds the preset range, changing the rotation speed of the winding member to adjust the tension of the separation membrane.

For example, the preset range may be from (Fs-20)gf to (Fs+20)gf.

The embodiments of the application adjust the tension of the separation membrane by adjusting the rotation speed of the winding member, so that the timeliness of tension closed-loop control can be improved, and the risk of the separation membrane wrinkling can be reduced.

In some embodiments, the separation membrane is configured to pass through a pressure roller, and the pressure roller is configured to be movable. Before winding the electrode sheet and the separation membrane, the pressure roller is in a preset position Q.

The step S400 includes: S410, when a distance of the pressure roller deviating from the preset position Q is less than or equal to a preset value, the tension change of the separation membrane is within the preset range; S420, when the distance of the pressure roller deviating from the preset position is greater than the preset value, the tension change of the separation membrane exceeds the preset range.

The embodiments of the application calculates the real-time tension of the separation membrane according to the position change of the pressure roller, thereby adjusting the tension of the separation membrane, achieving closed-loop control of the tension, reducing tension fluctuation of the separation membrane, reducing the risk of the electrode sheet wrinkling and misalignment of the separation membrane, and improving safety of the electrode assembly.

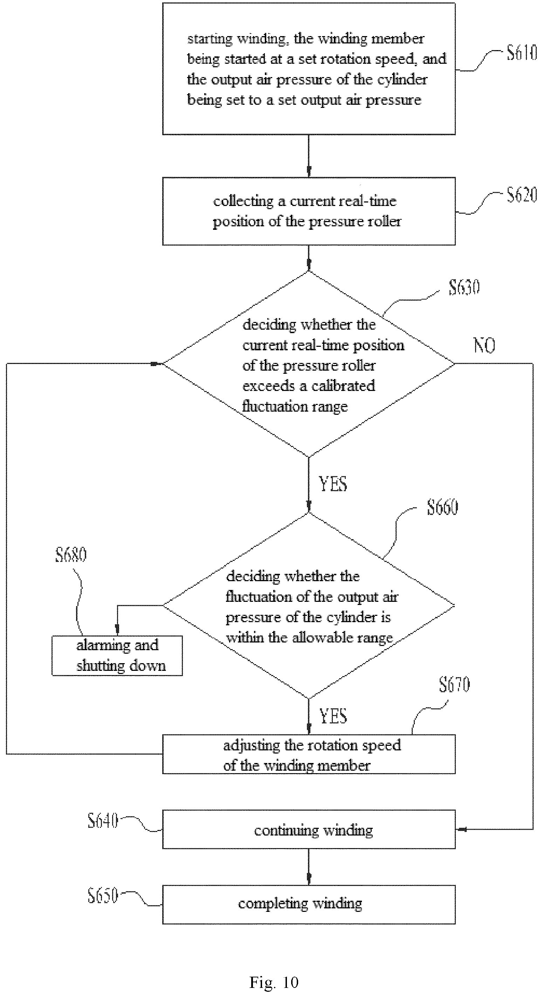

Fig. 10 is a schematic view of tension control logic of a winding device of some embodiments of the application.

As shown in Fig. 10, the winding device of a specific embodiment of the application can achieve closed-loop control of the tension according to the following steps.

Firstly, perform step S610: starting winding, the winding member being started at a set rotation speed, and the output air pressure of the cylinder being set to a set output air pressure P.

For example, the rotation speed range of the winding member may be 500mm/s-2000mm/s, and optionally, the rotation speed range of the winding member may be 800mm/s-1200mm/s. For example, the rotation speed is set to 1000mm/s.

For example, the output air pressure of the cylinder may be 0.05 MPa-0.5MPa, and optionally, the output air pressure of the cylinder may be 0.1MPa-0.2MPa. For example, the output air pressure P is set to 0.15MPa.

After executing the step S610, start executing step S620: collecting a current real-time position C of the pressure roller. For example, the grating ruler can collect the current real-time position C of the pressure roller in real time.

After collecting the current real-time position C of the pressure roller, perform step S630: deciding whether the current real-time position C of the pressure roller exceeds a calibrated fluctuation range.

For example, a deviation amount Cᵢ of the pressure roller is calculated according to the current real-time position C and the preset position Q. Taking the center of the grating ruler as the zero point, the grating ruler is positive in an extension direction of the cylinder and negative in a retraction direction of the cylinder, and the zero point corresponds to the preset position Q. In other words, when Cᵢ is negative, the cylinder retracts; when Cᵢ is positive, the cylinder extends. If |Cᵢ| is greater than or equal to 5mm, the current real-time position C of the pressure roller exceeds the calibrated fluctuation range; if |Cᵢ| is less than 5mm, the current real-time position C of the pressure roller does not exceed the calibrated fluctuation range.

In step S630, if the current real-time position C of the pressure roller does not exceed the calibrated fluctuation range, then steps S640 and S650 are performed, that is, the winding member continues to wind until the winding is completed.

In step S630, if the current real-time position C of the pressure roller exceeds the calibrated fluctuation range, then step S660 is performed: deciding whether the fluctuation of the output air pressure of the cylinder is within the allowable range. For example, when the output air pressure is greater than (P-0.005)MPa and less than (P+0.005), then it is determined that the fluctuation of the output air pressure of the cylinder is within the allowable range.

In step S660, if the fluctuation of the output air pressure of the cylinder is within the allowable range, then step S670 is performed: adjusting the rotation speed of the winding member. During the execution of step S670, the execution of step S630 continues until the current real-time position C of the pressure roller does not exceed the calibrated fluctuation range.

For example, when Cᵢ is greater than 5mm, the rotation speed of the winding member may be increased to increase the tension of the separation membrane, and the cylinder will retract under the action of the tension; when Cᵢ is less than -5mm, the rotation speed of the winding member may be reduced to reduce the tension of the separation membrane, and the cylinder will push the pressure roller in the extended direction. The change amount of the rotation speed of the winding member can be set according to the actual situation.

In step S660, if the fluctuation of the output air pressure of the cylinder is not within the allowable range, then step S680 is performed: alarming and shutting down. After alarming and shutting down, the cylinder is repaired.

In some embodiments, step S630 is performed once for every 20° rotation of the winding member.

It should be noted that, in the case of no contradiction, the embodiments in the application and the features in the embodiments may be combined with each other.

At last, it should be appreciated that the above embodiments are only used to illustrate the technical solutions of the application but not to limit the same. A person of ordinary skill in the art is to understand that it is still possible to modify the technical solutions described in the above embodiments or equivalently replace some of the technical features thereof while the modifications and replacements shall not render the substance of the corresponding technical solutions deviate from the spirit and scope of the technical solutions in the various embodiments of the application.

## Claims

1. A winding device comprising:
a winding member for winding an electrode sheet and a separation membrane;
a traction member for pulling the separation membrane passing through the winding member, the traction member being configured to release the separation membrane when the winding member winds the electrode sheet and the separation membrane;
a detection mechanism for sensing a tension change of the separation membrane located between the winding member and the traction member; and
an adjustment mechanism configured to adjust a tension of the separation membrane according to the tension change of the separation membrane sensed by the detection mechanism.

2. The winding device according to claim 1, wherein the traction member pulls the separation membrane passing through the winding member by rotating.

3. The winding device according to claim 2, wherein the adjustment mechanism adjusts the tension of the separation membrane by adjusting a rotation speed of the traction member.

4. The winding device according to claim 2 or 3, further comprises a rotational member configured to be rotatable;
the winding member and the traction member are installed on the rotational member.

5. The winding device according to any of claims 1-4, wherein the adjustment mechanism adjusts the tension of the separation membrane by adjusting the rotation speed of the winding member.

6. The winding device according to any of claims 1-5, wherein the detection mechanism comprises a pressure roller, a drive member and a displacement sensor;
the pressure roller is used to press against the separation membrane, and the pressure roller is configured to be translationally movable; the drive member is connected to the pressure roller and used to apply an acting force to the pressure roller; the displacement sensor is configured to sense the tension change of the separation membrane by detecting a displacement of the pressure roller.

7. The winding device according to claim 6, wherein the drive member comprises a cylinder.

8. The winding device according to claim 6 or 7, wherein the displacement sensor comprises a grating ruler.

9. The winding device according to any of claims 6-8, wherein
the pressure roller is configured to be translationally movable in a first direction;
the winding device further comprises a first roller and a second roller arranged opposite to each other in a second direction, and the first direction intersects with the second direction;
the first roller, the pressure roller and the second roller are sequentially arranged in a tape run path of the separation membrane.

10. The winding device according to claim 9, wherein
the first roller and the second roller are both located on a side of the separation membrane away from the pressure roller;
the first direction is perpendicular to the second direction; in the second direction, a distance between a central axis of the pressure roller and a central axis of the first roller is H1, a distance between the central axis of the pressure roller and a central axis of the second roller is H2, and H1 is equal to H2.

11. The winding device according to any of claims 1-10, wherein the winding member comprises two winding half shafts arranged opposite to each other, and the separation membrane is configured to pass between the two winding half shafts.

12. The winding device according to any of claims 1-11, further comprises a cutting blade mechanism, and the cutting blade mechanism is arranged upstream or downstream of the detection mechanism and used to cut off the separation membrane.

13. A winding method, comprising:
providing a separation membrane, the separation membrane passing through a winding member and being pulled by a traction member;
providing an electrode sheet;
the winding member winding the electrode sheet and the separation membrane, while the traction member releasing the separation membrane;
sensing a tension change of the separation membrane located between the winding member and the traction member;
adjusting a tension of the separation membrane according to the tension change of the separation membrane.

14. The winding method according to claim 13, wherein the step of adjusting the tension of the separation membrane according to the tension change of the separation membrane comprises:
when the tension change of the separation membrane is within a preset range, maintaining a rotation speed of the winding member;
when the tension change of the separation membrane exceeds the preset range, changing the rotation speed of the winding member to adjust the tension of the separation membrane.

15. The winding method according to claim 14, wherein the separation membrane is configured to pass through a pressure roller, and the pressure roller is configured to be movable; before winding the electrode sheet and the separation membrane, the pressure roller is in a preset position;
the step of sensing the tension change of the separation membrane located between the winding member and the traction member comprises:
when a distance of the pressure roller deviating from the preset position is less than or equal to a preset value, the tension change of the separation membrane is within the preset range; when the distance of the pressure roller deviating from the preset position is greater than the preset value, the tension change of the separation membrane exceeds the preset range.
